# EUROPEAN PATENT APPLICATION

(11) **EP 3 927 033 A1**
(43) Date of publication of application: **22.12.2021**
(21) Application number: 19914776.0
(22) Date of filing: 14.02.2019
(51) Int. Cl.: H04W 56/00, H04W 16/26, H04W 84/18

(54) **WIRELESS NODE AND WIRELESS COMMUNICATION CONTROL METHOD**

(71) Applicant: NTT DOCOMO, INC., Chiyoda-Ku Tokyo 100-6150 (JP)
(72) Inventor: HARADA, Hiroki, Tokyo 100-6150 (JP); TAKEDA, Kazuaki, Tokyo 100-6150 (JP); WANG, Jing, Beijing 100190 (CN)
(74) Representative: Hoffmann Eitle
(86) International application number: PCT/JP2019/005444
(87) International publication number: WO 2020/166039

(57) **Abstract**

A radio node includes a reception section that receives, from a first downlink radio link, information on an offset that may reside in transmission timing adjustment for the first downlink radio link at an upstream node; and a control section that controls a transmission timing for a second downlink radio link toward a downstream node based on the information on the offset.

## Description

### Technical Field

The present disclosure relates to a radio node and a radio communication control method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed from LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

For future radio communication systems (e.g., 5G), a technique of Integrated Access and Backhaul (IAB) that integrates an access link and a backhaul (BH) link has been studied (Non-Patent Literature (hereinafter referred to as "NPL") 1). An IAB node, which is one example of a radio node, forms a radio access link with a User Equipment (UE), and also forms a wireless BH link with another IAB node and/or a radio base station.

### Citation List

### Non-Patent Literature

NPL 1 3GPP TR 38.874 V16.0.0 "3rd Generation Partnership Project; Technical Specification Group Radio Access Network; NR; Study on Integrated Access and Backhaul (Release 16)," December 2018

### Summary of Invention

### Technical Problem

However, adjustment of a transmission timing between radio nodes has not been studied enough.

An object of one aspect of the present disclosure is to appropriately adjust a transmission timing between radio nodes.

### Solution to Problem

A radio node according to one aspect of the present disclosure includes a reception section that receives, from a first downlink radio link, information on an offset that may reside in transmission timing adjustment for the first downlink radio link at an upstream node; and a control section that controls a transmission timing for a second downlink radio link toward a downstream node based on the information on the offset.

### Advantageous Effects of Invention

According to the present disclosure, it is possible to appropriately adjust a data transmission timing between radio nodes.

### Brief Description of Drawings

FIG. 1 illustrates a configuration example of a radio communication system according to an embodiment of the present disclosure;
FIG. 2 illustrates a configuration example of IAB nodes according to the present embodiment;
FIG. 3 is a view for explaining timing alignment between radio sections according to the present embodiment;
FIG. 4 is a view for explaining a multi-hop topology and a residual error according to the present embodiment;
FIG. 5 illustrates an example in which a child IAB node has multiple parent IAB nodes according to the present embodiment;
FIG. 6 is a view for explaining a residual error sign according to the present embodiment; and
FIG. 7 illustrates an example of a hardware configuration of the IAB node and a user equipment according to the present disclosure.

### Description of Embodiments

Hereinafter, an embodiment of the present disclosure will be described with reference to the accompanying drawings.

### (Present Embodiment)

### <System Configuration>

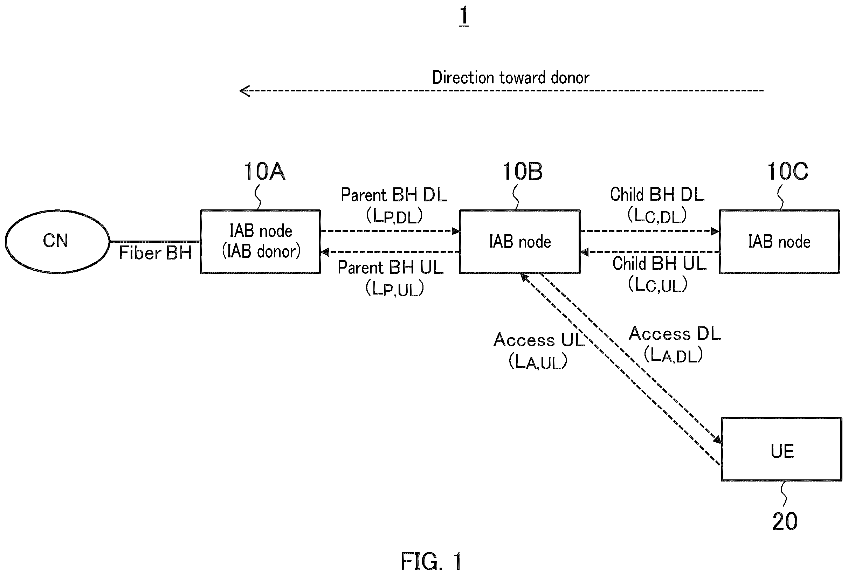

FIG. 1 illustrates a configuration example of a radio communication system.

Radio communication system 1 includes a plurality of IAB nodes 10A to 10C, each of which is one example of a radio node, and UE 20, which is one example of a user equipment. Hereinafter, to describe IAB nodes 10A to 10C without distinguishing them from one another, only the numeral common to the reference signs may be used such as "IAB node(s) 10."

IAB nodes 10A to 10C are connected to one another by radio communication. As illustrated in FIG. 1, IAB node 10B is connected to IAB node 10A and IAB node 10C. Paying attention to the relationship between IAB node 10A and IAB node 10B, IAB node 10A is the first node upstream of IAB node 10B. In other words, IAB node 10B is the first node downstream of IAB node 10A. Thus, IAB node 10A may be called as a parent IAB node for IAB node 10B, and IAB node 10B may be called as a child IAB node for IAB node 10A. Here, "downstream" means a direction away from an IAB donor and "upstream" means a direction nearer the IAB donor.

Each of IAB nodes 10A to 10C forms a cell, which is an area in which the IAB node is able to perform radio communication. That is, each of IAB nodes 10 has a function as a base station. UE 20 in a cell is able to connect by radio to IAB node 10 forming the cell.

When IAB node 10A is an IAB donor, IAB node 10A connects to a communication system such as a Core Network (CN) through a transmission/reception means such as a fiber BH. Note that the fiber BH is not limited to an optical fiber, and may be any means capable of transmitting and receiving data. Note also that the transmission/reception means between IAB node 10A and the core network or the like may be a means using high-capacity radio. Note that the number of IAB nodes 10 and the number of UEs 20 included in radio communication system 1 are not limited to the example of FIG. 1. For example, the number of parent IAB nodes 10A connected to IAB node 10B may be two or more. Further, the number of child IAB nodes 10C connected to IAB node 10B may be two or more. Furthermore, the number of UEs 20 connected to IAB node 10B may be two or more.

The letter "L" and its subscripts illustrated in FIG. 1 denote the following:
- "L_{P,DL}" denotes a Downlink (DL) from parent IAB node 10A to IAB node 10B;
- "L_{P,UL}" denotes an Uplink (UL) from IAB node 10B to parent IAB node 10A;
- "L_{C,DL}" denotes a DL from IAB node 10B to child IAB node 10C;
- "L_{C,UL}" denotes a UL from child IAB node 10C to IAB node 10B;
- "L_{A,DL}" denotes a DL from IAB node 10B to UE 20; and
- "L_{A,UL}" denotes a UL from UE 20 to IAB node 10B.

L_{A,DL} and/or L_{A,UL} are referred to as access links. L_{P,DL}, L_{P,UL}, L_{C,DL}, and/or L_{C,UL} are referred to as BH links.

### <IAB Node>

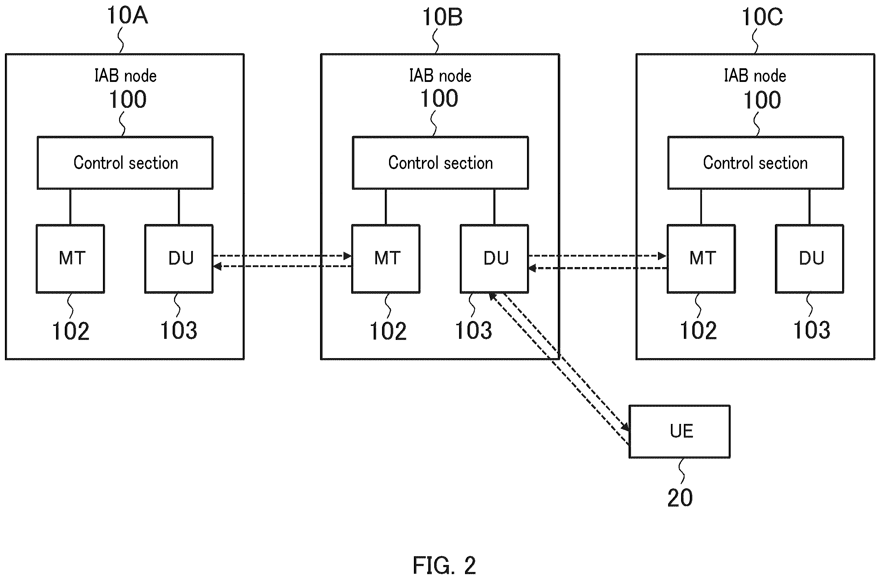

FIG. 2 illustrates a configuration example of IAB nodes 10.

As illustrated in FIG. 2, each of IAB nodes 10 includes control section 100, Mobile Termination (MT) 102, and Distributed Unit (DU) 103. MT 102 and DU 103 may be functional blocks. Hereinafter, a function of MT 102 may be expressed as "MT" without the reference sign, and a function of DU 103 may be expressed as "DU" without the reference sign. DU 103 may have functions corresponding to those of a base station. DU 103 may also have functions corresponding to those of an extension station of a base station which includes the extension station for performing radio processing and an aggregation station for performing processing other than the radio processing. One example of MT 102 may have functions corresponding to those of a terminal.

MT 102 of IAB node 10B controls a BH link to parent IAB node 10A (hereinafter referred to as "parent link"). DU 103 of IAB node 10B controls a BH link to child IAB node 10C and/or an access link to UE 20. Hereinafter, the BH link to child IAB node 10C and/or the access link to UE 20 are referred to as "child links."

Control section 100 controls MT 102 and DU 103. Operations of IAB node 10 described below may be implemented by control section 100 controlling MT 102 and DU 103. Control section 100 may also include a storage section for storing therein a variety of information.

A half-duplex constraint may be applied between the parent link and the child link. To realize the half-duplex constraint, Time Division Multiplexing (TDM) may be applied to the parent link and the child link. In this case, either the parent link or the child link may be able to utilize time resources. Note that the application of TDM is one example, and Frequency Division Multiplexing (FDM) or Space Division Multiplexing (SDM) may, for example, be applied.

One of the following types is configured to a time resource on the parent link (hereinafter referred to as "MT resource").
- An MT resource to which a DL type is configured (hereinafter referred to as "MT-D") is used as L_{P,DL}.
- An MT resource to which a UL type is configured (hereinafter referred to as "MT-U") is used as L_{P,UL}.
- An MT resource to which a Flexible (FL) type is configured (hereinafter referred to as "MT-F") is used as L_{P,DL} or L_{P,UL}.

The MT resource may be replaced with another expression such as a resource used for communication with parent IAB node 10A, a resource used for communication with parent IAB node 10A over the backhaul link, or a resource used for communication with a serving cell. The MT resource may also be one example of a resource in a first radio section.

One of the following types is configured to a time resource on the child link (hereinafter referred to as "DU resource").
- A DU resource to which a DL type is configured (hereinafter referred to as "DU-D") may be used as L_{C,DL} or L_{A,DL}.
- A DU resource to which a UL type is configured (hereinafter referred to as "DU-U") may be used as L_{C,UL} or L_{A,UL}.
- A DU resource to which an FL type is configured (hereinafter referred to as "DU-F") may be used as L_{C,DL}, L_{C,UL}, L_{A,DL}, or L_{A,UL}.
- A DU resource to which a Not-Available (NA) type is configured (hereinafter referred to as "DU-NA") is not used for the child link.

The DU resource may be replaced with another expression such as a resource used for communication with child IAB node 10C and/or UE 20, or a resource used for communication with child IAB node 10C over the backhaul link and/or with UE 20 over the access link. The DU resource may also be one example of a resource in a second radio section.

Further, one of the following types is configured to DU-D, DU-U, and DU-F.
- A DU resource to which a Hard type is configured is used for the child link but not for the parent link. Hereinafter, the DU resource to which the Hard type is configured may be referred to as "DU(H)."
- An explicit and/or implicit indication from parent IAB node 10A determines whether or not a DU resource to which a Soft type is configured is available for the child link (hereinafter referred to as "Availability"). Hereinafter, the DU resource to which the Soft type is configured may be referred to as "DU(S)."

Note that the configuration of DL, UL, FL, and NA and the configuration of Soft and Hard for the DU resource may also be semi-statically performed. For example, these configurations for the DU may be configured by an RRC parameter. The "RRC" is an abbreviation for Radio Resource Control. Note that the RRC parameter may be replaced with another term such as an RRC signaling, an RRC message, or an RRC configuration. These configurations for the DU may also be configured by an F1-AP parameter. Note that the F1-AP parameter may be replaced with another term such as an F1-AP signaling or an F1-AP message.

### <Study>

Over-The-Air (OTA)-based transmission timing alignment between IAB nodes 10 will be described. Note that "alignment" may be replaced with another term such as "arraying," "positioning," "position adjustment," or "synchronization."

For transmission timing alignment, IAB node 10 may set a DL transmission timing ahead of a DL reception timing by a time period of TA/2 + T_{delta}. Note that "TA" is an abbreviation for Timing Advance.

T_{delta} is a value for considering factors such as an offset between the DL transmission timing and the UL reception timing for parent IAB node 10A and the like. Such factors may include, for example, a switching time for switching from transmission to reception, hardware impairments, and/or the like. T_{delta} may be signaled from parent IAB node 10A to child IAB node 10B.

TA is a value indicating a timing gap between the UL transmission timing and the DL reception timing. TA may be derived based on an existing mechanism.

As for T_{delta} used in radio sections between IAB nodes 10, the following studies have not been enough, for example:
- A range and granularity of a T_{delta} value;
- Aperiodic or periodic updating of T_{delta};
- Other timing degradation factors included in T_{delta} for adjusting timings for the IAB nodes; and
- Timing alignment in a case where IAB node 10B has multiple parent IAB nodes 10A.

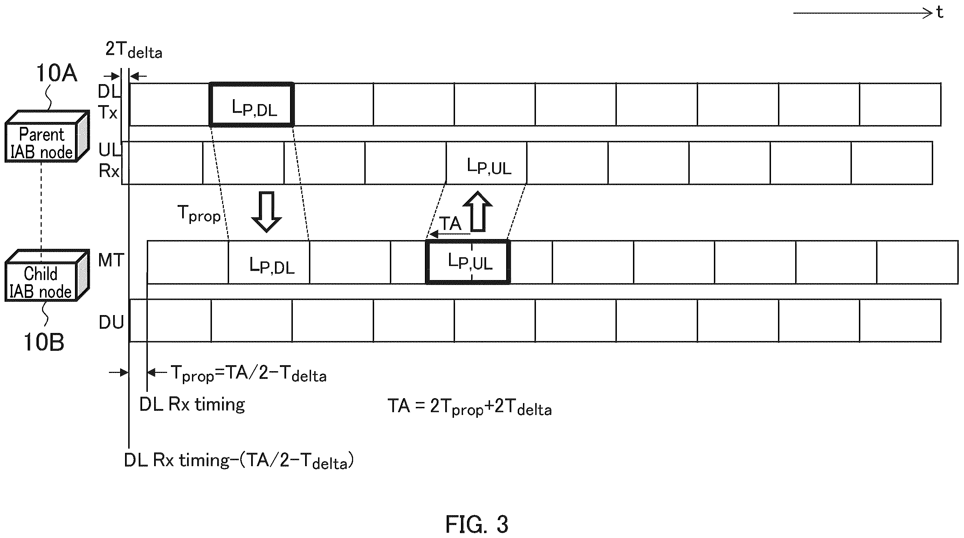

Next, one example of timing alignment will be described with reference to FIG. 3.

For example, as illustrated in FIG. 3, a drift between the DL transmission timing and the UL reception timing for parent IAB node 10A is a time period of 2T_{delta}. In addition, a propagation delay time from parent IAB node 10A to child IAB node 10B is denoted by "Tₚᵣₒₚ." In this case, parent IAB node 10A may give an indication such that TA applied to the UL transmission timing for the MT of child IAB node 10B is 2Tₚᵣₒₚ + 2T_{delta}. Then, child IAB node 10B may set the DL transmission timing for the DU ahead of the DL reception timing for the MT by a time period of TA/2 - T_{delta}. This allows alignment between the DL transmission timing for parent IAB node 10A and the DL transmission timing for the DU of child IAB node 10B. Note that "computation" may be replaced with another term such as "determination" or "judgment."

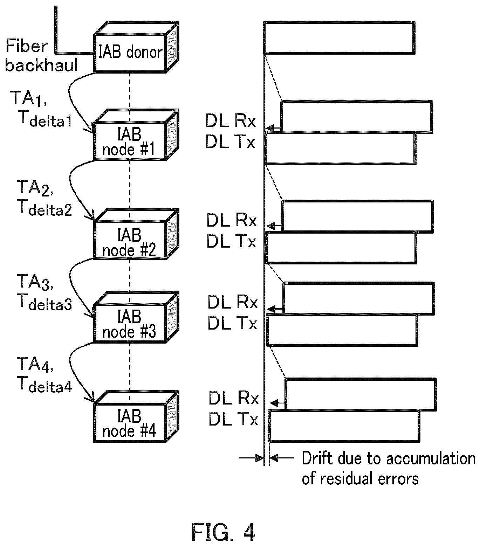

In a multi-hop topology as illustrated in FIG. 4, residual errors may accumulate with respect to the DL transmission timing with increasing number of hops due to limits of the T_{delta} granularity.

For example, as illustrated in FIG. 4, the multi-hop topology in which IAB nodes #1 to #4 are connected in series to the IAB donor is assumed. T_{delta1} indicated by the IAB donor may include residual error ε₁. Similarly, T_{delta2} to T_{delta4} indicated by IAB nodes #1 to #3 may include residual errors ε₂ to ε₄, respectively. Thus, when IAB node #4 performs alignment of the DL transmission timing for the DU using TA₄ and T_{delta4} indicated from IAB node #3, there is a possibility that the DL transmission timing for the DU is not aligned with the DL transmission timing for upstream IAB node 10 due to the residual errors ε₁ to ε₄ accumulated in T_{delta4}.

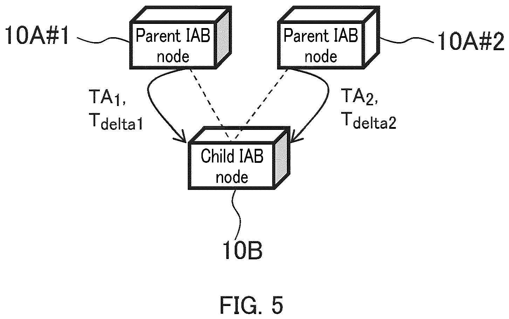

Moreover, an enough study has not been made on how child IAB node 10B determines the DL transmission timing when child IAB node 10B has multiple parent IAB nodes 10A#1 and 10A#2 as illustrated in FIG. 5.

That is, a method for parent IAB node 10A to generate T_{delta} and a method for child IAB node 10B to use T_{delta} indicated from parent IAB node 10A have not been studied enough. In the following, a new proposal for the points that have not been studied enough will be described.

### <Proposal>

Generation of T_{delta} and determination of a DL transmission timing based on indicated T_{delta} may be specified in order for a plurality of IAB nodes 10 to be capable of appropriately determining DL transmission timings for timing alignment.

Next, the method for parent IAB node 10A to generate T_{delta} and the method for child IAB node 10B to determine the DL transmission timing will be described.

### <Method for Parent IAB Node 10A to Generate T_{delta}>

Next, a description will be given of examples (A1) and (A2) of the method for parent IAB node 10A to generate T_{delta}. Note that both (A1) and (A2) may be applied, or one of them may be applied.

### (A1)

T_{delta} may be generated in order for the DL transmission timing for child IAB node 10B to be aligned with the DL transmission timing for parent IAB node 10A based on TA/2 - T_{delta}.

In this case, since the granularity of T_{delta} is limited, a residual error may exist. Note that "residual error" may be replaced with another term such as "residual offset" or the like.

Information indicating that an expected residual error is positive or negative (hereinafter referred to as "residual error sign"), together with the T_{delta} value, may be indicated (e.g., signaled) to child IAB node 10B. In this case, child IAB node 10B may generate T_{delta} by rounding the residual error in a direction of a sign opposite to the indicated residual error sign.

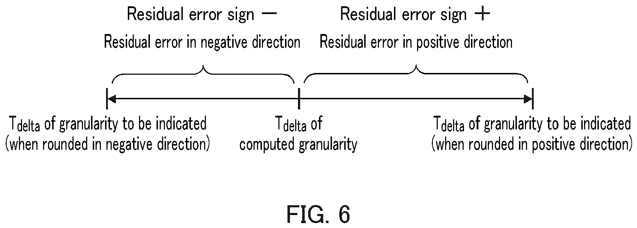

One example will be described with reference to FIG. 6. As illustrated in FIG. 6, since the granularity of T_{delta} that can be indicated by parent IAB node 10A to child IAB node 10B is limited, parent IAB node 10A may round the value of T_{delta} of the computed granularity to the granularity of T_{delta} to be indicated. That is, parent IAB node 10A may perform rounding on the value of T_{delta} of the computed granularity. Here, parent IAB node 10A may round T_{delta} of the computed granularity in either a decreasing direction (hereinafter referred to as "negative direction") or an increasing direction (hereinafter referred to as "positive direction"). Then, parent IAB node 10A may generate a negative residual error sign when rounding T_{delta} of the computed granularity in the negative direction, and may generate a positive residual error sign when rounding T_{delta} of the computed granularity in the positive direction.

Child IAB node 10B also computes T_{delta,} and rounds T_{delta} of the computed granularity to the granularity of T_{delta} to be indicated to further downstream IAB node 10C. At this time, child IAB node 10B may round the value of T_{delta} of the computed granularity in the direction of the sign opposite to the residual error sign indicated by parent IAB node 10A. For example, when the positive residual error sign is indicated from parent IAB node 10A, child IAB node 10B may round the value of T_{delta} of the computed granularity in the negative direction. For example, when the negative residual error sign is indicated from parent IAB node 10A, child IAB node 10B may round the value of T_{delta} of the computed granularity in the positive direction.

The residual error sign may, for example, be treated as in the following (B1) and/or (B2).

(B1) When the absolute value of the expected residual error is extremely small (e.g., less than a first threshold value), the residual error sign may be ignored. For example, when the absolute value of the expected residual error in T_{delta} of the computed granularity is less than the first threshold value, child IAB node 10B may ignore the indicated residual error sign and round T_{delta} of the computed granularity. By way of another example, when the absolute value of the expected residual error in T_{delta} of the computed granularity is less than the first threshold value, parent IAB node 10A may not indicate the residual error sign to child IAB node 10B.

(B2) When the absolute value of the expected residual error is slightly greater (e.g., greater than or equal to a second threshold value), the sign opposite to the residual error sign indicated by parent IAB node 10A may be selected. For example, when the absolute value of the expected residual error in T_{delta} of the computed granularity is greater than or equal to the second threshold value, child IAB node 10B may round T_{delta} of the computed granularity in the direction of the sign opposite to the indicated residual error sign. This (B2) may be applied when the absolute value of the residual error in the positive direction and the absolute value of the residual error in the negative direction are equivalent to each other (e.g., the difference between the absolute values of the two residual errors is less than a third threshold value). Further, T_{delta} of the computed granularity may be rounded in the direction of the sign of the smaller absolute value of the residual error when the difference between the absolute value of the residual error in the positive direction and the absolute value of the residual error in the negative direction is greater than or equal to the third threshold value.

According to the method of above-described (A1) for generating T_{delta}, T_{delta} is rounded at each of IAB nodes 10 in a direction in which T_{delta} and the residual error cancel out each other, and thus it is possible to prevent or reduce the accumulation of the residual errors with the increase in the number of hops. Therefore, the DL transmission timings for IAB nodes 10 are aligned.

### (A2)

When IAB node 10 has an accurate time synchronization source (e.g., Global Navigation Satellite System (GNSS)), T_{delta} indicated to the child IAB node may be adjusted using the time synchronization source.

That is, when IAB node 10B has the time synchronization source, the DL transmission timing may be determined based on the DL reception timing from parent IAB node 10A, TA, and T_{delta}. Meanwhile, T_{delta} indicated by IAB node 10B may be adjusted using the time synchronization source.

In this case, T_{delta} may be generated in order for the DL transmission timing for child IAB node 10B based on TA/2 - T_{delta} to be aligned with an ideal DL transmission timing derived based on the time synchronization source.

Further, parent IAB node 10A may indicate, to child IAB node 10B, information on the absolute time (that is, the ideal DL transmission timing) of the DL transmission timing intended by the network of radio communication system 1.

In addition, a hop order from IAB node 10 having the time synchronization source may be indicated, together with T_{delta,} to child IAB node 10B.

According to the method of above-described (A2) for generating T_{delta,} the accumulation of the residual errors in T_{delta} computed by IAB node 10 having the time synchronization source is reset, and thus it is possible to prevent or reduce the accumulation of the residual errors with the increase in the number of hops. Therefore, the DL transmission timings for IAB nodes 10 are aligned.

### <Method for Child IAB Node 10B to Determine DL Transmission Timing>

Next, a description will be given of examples (Alt. C1) and (Alt. C2) of the method for child IAB node 10B to determine the DL transmission timing based on T_{delta} indicated from parent IAB node 10A. Note that either one of (Alt. C1) and (Alt. C2) may be applied.

### (Alt. C1)

When child IAB node 10B has multiple parent IAB nodes 10A#1 and 10A#2 as illustrated in FIG. 5, child IAB node 10B may perform the following operations for the purpose of timing alignment. That is, child IAB node 10B may select one of parent IAB nodes 10A#1 and 10B#2 which has a smaller hop order. The purpose of timing alignment may, for example, be the purpose of determining the DL transmission timing and/or the purpose of generating T_{delta}.

The hop order may be indicated from parent IAB node 10A. The hop order indicated may be a hop order from the IAB donor. Alternatively, the hop order indicated may be a hop order from IAB node 10 having the time synchronization source described above.

A difference between a value (e.g., T_{delta}) derived by parent IAB node 10A with a smaller hop order and a value (e.g., T_{delta}) derived by parent IAB node 10A with a greater hop order may be reported to parent IAB node 10A with the greater hop order. That is, the DL transmission timing may be determined based on an indication from one parent IAB node 10A. Meanwhile, an indication of T_{delta} may be adjusted using the report from child IAB node 10B. Thus, parent IAB node 10A with the greater hop order can improve the accuracy of T_{delta} using the difference reported from child IAB node 10B.

### (Alt. C2)

The DL transmission timing may be derived from an average of values (e.g., T_{delta}) derived by multiple parent IAB nodes 10A. In this case, one of the following (Alt. C2-1), (Alt. C2-2), and (Alt. C2-3) may be applied.

(Alt. 2-1) Averaging may be allowed when multiple parent IAB nodes 10A have a common hop order. Alternatively, averaging may be allowed when the hop orders of multiple parent IAB nodes 10A are within a predetermined range. Alternatively, averaging may be allowed when differences between the hop orders of multiple parent IAB nodes 10A are within a predetermined range.

(Alt. 2-2) Averaging may be allowed regardless of the hop orders of parent IAB nodes 10A.

(Alt. 2-3) Averaging with weighting based on the hop order may be allowed. For example, in averaging, a greater weighting may be applied to IAB node 10 with a smaller hop order.

According to the method for determining the DL transmission timing based on the indicated T_{delta} as described above, child IAB node 10B can determine the DL transmission timing based on T_{delta} even when child IAB node 10B has multiple parent IAB nodes 10A.

### <Summary of Present Embodiment>

In the present embodiment, IAB node 10B includes a reception section that receives, from a first downlink radio link, information on an offset that may reside in transmission timing adjustment for the first downlink radio link at an upstream node; and a control section that controls a transmission timing for a second downlink radio link toward a downstream node based on the information on the offset. Here, the information on the offset may include the residual error sign described above. In addition, since the information on the offset may change according to the hop order, the information on the offset may include information indicating the hop order described above.

According to the above configuration, it is possible to prevent or reduce the accumulation of the residual errors with the increase in the number of hops, so that the DL transmission timings for IAB nodes 10 are aligned with one another.

### <Hardware Configuration and/or the like>

Note that the block diagrams used to describe the above embodiment illustrate blocks on a function-by-function basis. These functional blocks (component sections) are implemented by any combination of at least one of hardware and software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmission section," "transmitting unit," or "transmitter." The methods for implementing the functions are not limited specifically as described above.

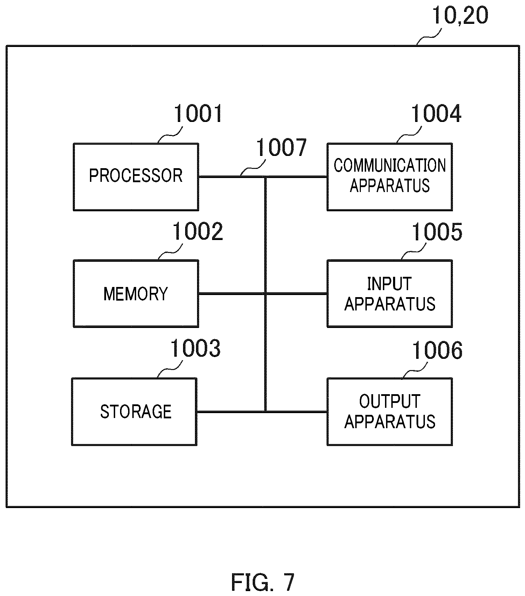

For example, the base station, user equipment, and the like according to an embodiment of the present disclosure may function as a computer that performs processing of a radio communication method of the present disclosure. FIG. 7 illustrates an example of a hardware configuration of the IAB node and UE according to an embodiment of the present disclosure. IAB node 10 and UE 20 described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of IAB node 10 and UE 20 may include one apparatus or a plurality of apparatuses illustrated in the drawings or may not include a part of the apparatuses.

The functions of IAB node 10 and UE 20 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 100, MT 102, DU 103, and the like described above may be implemented by processor 1001.

Processor 1001 reads a program (program code), a software module, data, and the like from at least one of storage 1003 and communication apparatus 1004 into memory 1002 and performs various types of processing according to the program (program code), the software module, the data, and the like. As the program, a program for causing the computer to perform at least a part of the operations described in the above embodiments is used. For example, the control section of UE 20 may be implemented by a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), a Random Access Memory (RAM), and the like. Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, a communication module, or the like. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, antennas and the like that IAB node 10 and UE 20 include may be realized by communication device 1004. A transmission/reception section may be implemented with a transmission section and a reception section physically or logically separated from each other.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, IAB node 10 and UE 20 may be configured to include hardware, such as a microprocessor, a digital signal processor (DSP), an Application Specific Integrated Circuit (ASIC), a Programmable Logic Device (PLD), and a Field Programmable Gate Array (FPGA), and the hardware may implement some or all of the functional blocks. For example, processor 1001 may be implemented using at least one of these pieces of hardware.

### <Notification and Signaling of Information>

The notification of information is not limited to the aspects/embodiments described in the present disclosure, and the information may be notified by another method. For example, the notification of information may be carried out by one or a combination of physical layer signaling (for example, Downlink Control Information (DCI) and Uplink Control Information (UCI)), higher layer signaling (for example, Radio Resource Control (RRC) signaling, Medium Access Control (MAC) signaling, broadcast information (Master Information Block (MIB) and System Information Block (SIB))), and other signals. The RRC signaling may be called as an RRC message and may be, for example, an RRC connection setup message, an RRC connection reconfiguration message, or the like.

### <Applied System>

The aspects/embodiments described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### <Processing Procedure and the like>

The orders of the processing procedures, the sequences, the flow charts, and the like of the aspects/embodiments described in the present disclosure may be changed as long as there is no contradiction. For example, elements of various steps are presented in exemplary orders in the methods described in the present disclosure, and the methods are not limited to the presented specific orders.

### <Operations of Base Station>

Specific operations which are described in the present disclosure as being performed by the base station may sometimes be performed by an upper node depending on the situation. Various operations performed for communication with a terminal in a network constituted by one network node or a plurality of network nodes including a base station can be obviously performed by at least one of the base station and a network node other than the base station (examples include, but not limited to, Mobility Management Entity (MME), Serving Gateway (S-GW), or the like). Although there is one network node in addition to the base station in the case illustrated above, a plurality of other network nodes may be combined (for example, MME and S-GW).

### <Direction of Input and Output>

The information or the like (see the item of "Information and Signals") can be output from a higher layer (or a lower layer) to a lower layer (or a higher layer). The information, the signals, and the like may be input and output through a plurality of network nodes.

### <Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variations and the like of Aspects>

The aspects/embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called as a carrier frequency, a cell, a frequency carrier, or the like.

### <"System" and "Network">

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the formulas and the like using the parameters may be different from the ones explicitly disclosed in the present disclosure. Since various channels (for example, PUCCH and PDCCH) and information elements can be identified by any suitable names, various names assigned to these various channels and information elements are not limitative in any respect.

### <Base Station>

The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," and "component carrier" may be used interchangeably in the present disclosure. The base station may be called as a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes some or all of the coverage area of at least one of the base station and the base station subsystem that perform the communication service in the coverage.

### <Mobile Station>

The terms "Mobile Station (MS)," "user terminal," "User Equipment (UE)," and "terminal" may be used interchangeably in the present disclosure.

The mobile station may be called, by those skilled in the art, a subscriber station, as a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### <Base Station/Mobile Station>

At least one of the base station and the mobile station may be called as a transmission apparatus, a reception apparatus, a communication apparatus, or the like. Note that at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that at least one of the base station and the mobile station also includes an apparatus that does not necessarily move during the communication operation. For example, at least one of the base station and the mobile station may be Internet-of-Things (IoT) equipment such as a sensor.

The base station in the present disclosure may also be replaced with the user equipment. For example, the aspects/embodiments of the present disclosure may find application in a configuration that results from replacing communication between the base station and the user equipment with communication between multiple user equipments (such communication may, e.g., be referred to as device-to-device (D2D), vehicle-to-everything (V2X), or the like). In this case, user equipment 20 may be configured to have the functions that base station 10 described above has. The wordings "uplink" and "downlink" may be replaced with a corresponding wording for inter-equipment communication (for example, "side"). For example, an uplink channel, a downlink channel, and the like may be replaced with a side channel. Similarly, the user equipment in the present disclosure may be replaced with the base station. In this case, base station 10 may be configured to have the functions that user equipment 20 described above has.

### <Meaning and Interpretation of Terms>

As used herein, the term "determining" may encompass a wide variety of actions. For example, "determining" may be regarded as judging, calculating, computing, processing, deriving, investigating, looking up, searching (or, search or inquiry) (e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

### <Reference Signal>

The reference signal can also be abbreviated as an RS and may also be called as a pilot depending on the applied standard.

### <Meaning of "based on">

The description "based on" used in the present disclosure does not mean "based only on," unless otherwise specified. In other words, the description "based on" means both of "based only on" and "based at least on."

### <Terms "first" and "second">

Any reference to elements by using the terms "first," "second," and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <"Means">

The "means" in the configuration of each apparatus described above may be replaced with "section," "circuit," "device," or the like.

### <Open-ended Format>

In a case where terms "include," "including," and their modifications are used in the present disclosure, these terms are intended to be inclusive like the term "comprising." Further, the term "or" used in the present disclosure is not intended to be an exclusive or.

### <Time Units such as TTI, Frequency Units such as RB, and Radio Frame Configuration>

The radio frame may be constituted by one frame or a plurality of frames in the time domain. The one frame or each of the plurality of frames may be called as a subframe in the time domain.

The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, may indicate at least one of SubCarrier Spacing (SCS), a bandwidth, a symbol length, a cyclic prefix length, a Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM) symbol(s), Single Carrier-Frequency Division Multiple Access (SC-FDMA) symbol(s), or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or PUSCH) that is transmitted in the time unit that is greater than the mini-slot may be referred to as a PDSCH (or PUSCH) mapping type A. The PDSCH (or PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called as a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user equipment) on a TTI-by-TTI basis to each user equipment. Note that the definition of TTI is not limited to this.

The TTI may be a time unit for transmitting a channel-coded data packet (a transport block), a code block, a codeword, or the like, or may be a unit for processing such as scheduling and link adaptation. Note that when the TTI is assigned, a time section (for example, the number of symbols) to which the transport block, the code block, the codeword, or the like is actually mapped may be shorter than the TTI.

Note that in a case where one slot or one mini-slot is referred to as the TTI, one or more TTIs (that is, one or more slots or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with a TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one subcarrier or a plurality of contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP. The BWP may include a UL BWP and a DL BWP. An UE may be configured with one or more BWPs within one carrier.

At least one of the configured BWPs may be active, and the UE may not assume transmission/reception of a predetermined signal or channel outside the active BWP. Note that "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Article>

In a case where articles, such as "a," "an," and "the" in English, for example, are added in the present disclosure by translation, nouns following these articles may have the same meaning as used in the plural.

### <"Different">

In the present disclosure, the expression "A and B are different" may mean that "A and B are different from each other." Note that the expression may also mean that "A and B are different from C." The expressions "separated" and "coupled" may also be interpreted in the same manner as the expression "A and B are different."

### Industrial Applicability

One aspect of the present disclosure is useful for radio communication systems.

### Reference Signs List

- 10, 10A, 10B, 10C IAB: node
- 20: UE
- 100: Control section
- 102: MT
- 103: DU

## Claims

1. A radio node, comprising:
a reception section that receives, from a first downlink radio link, information on an offset that may reside in transmission timing adjustment for the first downlink radio link at an upstream node; and
a control section that controls a transmission timing for a second downlink radio link toward a downstream node based on the information on the offset.

2. The radio node according to claim 1, wherein
the information on the offset includes information indicating positive or negative regarding a direction of the offset, and
the control section generates information on an offset for the downstream node, the information including a sign opposite to the information on the offset received from the upstream node.

3. The radio node according to claim 1, wherein
the control section generates information on an offset for the downstream node using a time synchronization source.

4. The radio node according to claim 3, wherein
the information on the offset includes information indicating a hop order from an upstream node having a time synchronization source, and
the control section controls the transmission timing for the second downlink radio link toward the downstream node using the information on the offset from one of a plurality of the upstream nodes which has a smallest hop order.

5. The radio node according to claim 1, wherein
the control section controls the transmission timing for the second downlink radio link toward the downstream node using a time period resulting from averaging time periods for transmission timing adjustment, the time periods being included in a plurality of pieces of the information on the offset received from a plurality of the upstream nodes.

6. A radio communication control method, comprising the following performed by a radio node:
receiving, from a first downlink radio link, information on an offset that may reside in transmission timing adjustment for the first downlink radio link at an upstream node; and
controlling a transmission timing for a second downlink radio link toward a downstream node based on the information on the offset.
